# EUROPÄISCHE PATENTANMELDUNG

(11) **EP 3 443 836 A1**
(43) Veröffentlichungstag der Anmeldung: **20.02.2019**
(21) Anmeldenummer: 17001413.8
(22) Anmeldetag: 17.08.2017
(51) Int. Cl.: A01F 25/18

(54) **LANDMASCHINENANBAUGERÄT ZUR AUFBEREITUNG VON SILAGEN IN FAHRSILOS**

(71) Anmelder: Hödl, Ottmar, 94110 Wegscheid (DE)
(72) Erfinder: Hödl, Ottmar, 94110 Wegscheid (DE)

(57) **Zusammenfassung**

Walzen (3a, 3b) zu gleichmäßigen Verteilung, Glättung und Verdichtung von Silage in befahrbaren Flachsilos sind mittig geteilt und mit einem Getriebe (5) versehen, mit dem sie um z.B. 180° gedreht und ihre Rotationsrichting gleichzeitig umgekehrt werden kann.

## Beschreibung

### BEREICH DER ERFINDUNG

Die Erfindung bezieht sich auf die Aufbereitung von Silagen in befahrbaren Flachsilos, sog. Fahrsilos

### HINTERGRUND DER ERFINDUNG / ZU LÖSENDES PROBLEM

Futtermittel-Mischungen, wie insbesondere geschredderte Maispflanzen und anderes Grünfutter werden vielfach siliert, um durch die Milchsäure beim Vergärungsprozess haltbar und für Tiermägen leichter verdaulich zu machen.
Dazu muss das Silagematerial in die Flachsilos eingebracht, dort möglichst gleichmäßig verteilt und verdichtet werden.
Bei befahrbaren Flachsilos wird das Material üblicherweise hineingefahren, abgekippt und mit der Schaufel des Laders grob verteilt.
Die feine Verteilung erfolgte bisher mit rotierenden Rechen, ähnlich wie beim Schwadern von Heu. Das Problem dabei ist die ungleichmäßige Verteilung an den Rändern und insbesondere in den Ecken der meist rechtwinkeligen Flachsilos. Um dem Abzuhelfen, werden mehrfach Verteilvorrichtungen in Form von sich drehenden und mit Wendezinken versehenen Trommeln eingesetzt, die auch die gleichmäßige Verdichtung der Silage besorgen.
Diese werden meist auf der Vorder- oder Rückseite eines Traktors an den standardmäßigen DreiPunkt-Aufhängungen montiert. Zwar kann ihre Drehrichtung mit ihrem meist hydraulischen Antrieb umgekehrt werden, jedoch ergibt sich der beste Glättungseffekt, wenn die Rotation der Trommel gegen die Fahrtrichtung erfolgt. Dies zwingt den Benutzer zu ständigem Umsteuern und behindert die Arbeitsabläufe.

### STAND DER TECHNIK

Verteileinrichtungen für Silagen sind vielfach bekannt und durch Patente geschützt:
Geräte und Verfahren zur gleichmäßigen Verteilung von Silagematerial auf einem Futtertisch sind auch herkömmlich bekannt, und zwar bis Anfang der 90er Jahre überwiegend mit horizontal bzw. in spitzem Winkel dazu bewegten Rädern oder daran montierten Rechen, ähnlich wie beim Schwadern.

So weist DE 26 06 626 eine erste derartig patentierte "Vorrichtung zum Verteilen von Silogut in Flachsilos" aus, gefolgt von DE 35 36 242 A1 von 1985. Auch hier sind noch keine Verteilerwalzen vorgesehen, sondern es soll ein stemförmiges Flügelrad an vertikaler Achse mit den Armen einer Frontladervorrichung in spitzem Winkel über das Silagegut gefahren werden.
Dies kann naturgemäß keine so gleichmäßige Verteilung des Silagematerials im Fahrsilo wie mit den späteren trommelförmigen Verteilerwalzen bewirken.

Während sich andere Lösungen hier auf die Verteilung bei der Einbringung durch Einstreuen oder partielles Einschieben und Ausbreiten der Silagen wie bei EP 0 796 801 B1 beziehen, beschreibt schon DE 39 40 300 C2 von 1989 und später EP 0628 245 Verteiler für Silogut in Fahrsilos mit rotierenden Walzen - hier und in der Folge meist so ausgeführt, dass diese Implemente vorder- oder rückseitig am Traktor angefügt werden kennen - und Glättung durch Schiebe- und Zabewegungen ausführen, sowie gleichzeitig verdichten.
Dabei ist jedoch ein schneller Wechsel und hoch effiziente Bearbeitung nicht möglich.

### AUFGABENSTELLUNG

Es ist daher Aufgabe vorliegender Erfindung, die Arbeit des gleichmäßigen Verteilens und Glättens, wie auch des Verdichtens zu rationalisieren, d.h. hier in möglichst wenigen Arbeitsgängen zu fassen und durchzuführen.

### LÖSUNG, ERFINDERISCHER SCHRITT

Die Aufgabe wird dadurch gelöst, dass die - ohnehin meist geteilte - Walze an ihrem Mittelpunkt, wo sie am Gestell angelenkt wird, durch ein weiteres hydraulisch betätigtes Gelenk drehbar ausgeführt ist Durch ihre Drehung entlang der Fahrzeugachse (B) wird auch Drehrichtung der Trommeln umkehrt. Damit kann ohne Wenden des Traktors de Bearbeitung in beiden Richtungen erfolgen und somit wesentlich beschleunigt werden.
Hierfür sind die Bearbeitungszinken oder Wurftaufeln auf den Trommeln paarweise symmetrisch zur Walzenachse angelegt, so dass sich bei abwechselndem Vor- und Rückwärtslauf der Walzen (bezogen auf die Bearbeitungsrichtung) eine kongruente Bearbeitungsspur ergibt.

### NÄHERE BESCHREIBUNG ANHAND DER ZEICHNUNGEN

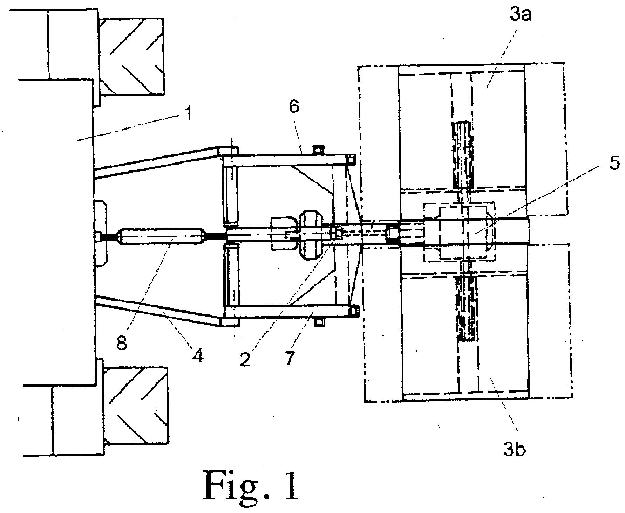

Fig. 1 Stellt eine Aufsicht des Anbaus an einen Traktor (1) dar.
die Zwillingswalze (3a und 3b) ist im Anlenkpunkt (2) mit der Aufhängung (4) des Traktors durch ein hydraulisch drehbares und umsteuerbares Kardangetriebe (5) miteinander und mit dem Traktor (1) verbunden, so dass nach Anheben der Zwillingswalze mit den Hydralikarrmen (6, 7), diese um die Längsachse (8) drehbar sind und dabei in der Richtung Ihrer Rotation umgesteuert werden.

## Patentansprüche

1. Landmaschinen-Anbaugerät zur Aufbereitung von Silagen in Fahrsilos, **dadurch gekennzeichnet, dass** eine über die Bearbeitungsbreite verlaufende Glätt- und Verteilerwalze mittig geteilt sind (in 3a und 3b) und in diesem Punkt (2) beliebig zur Längsachse (8) des Fahrzeugs (1)mit Geräteansatz drehbar angeordnet sind.

2. Landmaschinen-Anbaugerät zur Aufbereitung von Silagen in Fahrsilosnach Anspruch 1, **dadurch gekennzeichnet, dass** bei einem Verdrehen der Glätt- und Verteilerwalzen auch die Richtung ihrer Rotation umgekehrt ist.

3. Landmaschinen-Anbaugerät zur Aufbereitung von Silagen in Fahrsilos nach Anspruch 2, **dadurch gekennzeichnet, dass** die Zinken oder Wurftaufeln auf den Verteilerwalzen zur Achse der Walzen paarweise symmetrisch angeordnet sind so dass sich bei Vor- und Rückwärtslauf der Walzen eine kongruente Bearbeitungsspur ergibt.

4. Landmaschinen-Anbaugerät zur Aufbereitung von Silagen in Fahrsilosnach Anspruch 1, **dadurch gekennzeichnet, dass** die Glätt- oder Verteilerwalzen zum Drehen um die Längsachse (8) so weit wie nötig durch die Hydraulikarme (7) angehoben sind.
